# EUROPEAN PATENT SPECIFICATION

(11) **EP 2 735 372 B1**
(45) Date of publication and mention of the grant of the patent: **17.08.2016**
(21) Application number: 12769304.2
(22) Date of filing: 22.06.2012
(51) Int. Cl.: B03B 5/04, B03B 5/26, B03B 9/06, B29B 17/02, B29K 705/10, B29L 31/34, H01B 15/00

(54) **ELECTRIC WIRE SCRAP HIGH-GRADE RECOVERY APPARATUS**
HOCHGRADIGE RÜCKGEWINNUNGSVORRICHTUNG FÜR ELEKTRISCHE DRAHTABFÄLLE
DISPOSITIF DE RÉCUPÉRATION DE HAUT GRADE POUR DES REBUTS DE FIL ÉLECTRIQUE

(30) Priority: 21.07.2011 JP 2011160044
(43) Date of publication of application: 28.05.2014
(73) Proprietor: Sanritsu Machine Industry Co., Ltd., Chiba 263-0002 (JP)
(72) Inventor: NAKANE, Ryouichi, Chiba-shi Chiba 263-0002 (JP); NAKANE, Akira, Chiba-shi Chiba 263-0002 (JP)
(74) Representative: Gulde & Partner
(86) International application number: PCT/JP2012/065978
(87) International publication number: WO 2013/011798

(56) References cited:
- WO-A2-2009/013511
- DE-A1- 2 738 524
- GB-A- 2 146 272
- JP-A- 52 014 892
- JP-A- 60 205 911
- JP-A- H06 170 275
- JP-A- 2000 322 960
- JP-A- 2001 035 285
- JP-A- 2001 129 429
- JP-A- 2004 255 312
- JP-A- 2007 136 427
- JP-A- 2007 504 971
- KR-A- 20020 090 281
- US-A1- 2007 131 592

## Description

### Technical Field

The present invention relates to an electric wire scrap high-grade recovery apparatus which crushes electric wire scrap and recovers copper materials and the like contained in the crushed materials using a specific gravity difference and, more particularly, to an electric wire scrap high-grade recovery apparatus adapted to be able to recover high-purity copper materials and the like at high recovery rates.

### Background Art

Electric wire scrap contained in industrial waste and the like is attracting our attention as an effective resource which is available. In recovering copper materials from electric wire scrap, in general, there is known a dry type or wet type copper recovery apparatus which finely crushes electric wire scrap and recovers the copper materials contained in the crushed materials using a specific gravity difference. Related disclosures can be found in documents WO 2009/013511 A2, JP H06 170275 A, JP 2000 322960 A, US 2007/131592 A1, and DE 72 38 524 A1.

A wet type copper recovery apparatus is attracting our attention as a promising copper recovery apparatus because the recovery apparatus can recover copper materials at high recovery rates.

As described in Patent Literature 1, a wet type copper recovery apparatus of the type is configured in such a manner that water is flowed onto an upper surface of a separation bed which is inclined aslant, vibrations transmitted in an upward aslant direction are given to the separation bed, and crushed electric wire scrap is charged onto the separation bed, whereby resin scrap is separated from the crushed materials using a specific gravity difference between the copper materials contained in the crushed materials and resin scrap and the copper materials are recovered.

Because the resin scrap contained in the crushed materials which are charged has a smaller specific gravity than water, the resin scrap floats on the water and moves to a lower portion of the separation bed by the water flow. In contrast, the copper materials contained in the crushed materials which are charged have a larger specific gravity than water, and the copper materials settle out and come into contact with the upper surface of the separation bed. In this state, vibrations given to the separation bed act and move the copper materials to the upper part of the separation bed. The resin scrap is separated from the crushed materials of electric wire scrap by using this phenomenon and the copper materials are recovered.

Incidentally, the above-described crushed materials contain crushed materials which are not sufficiently crushed and in which resin scrap adheres partially to the copper materials and the like (hereinafter referred to as miscut materials), and in the above-described copper recovery apparatus, how the miscut materials are separated and recovered poses a big problem.

That is, because copper materials are contained in the above-described miscut materials, a problem is that that unless copper materials and the like contained in the miscut materials are recovered, it is impossible to further increase the recovery rate of copper materials from electric wire scrap. Another problem is that if the above-described miscut materials mix in the copper materials which are recovered, the purity of the recovered copper materials decreases.

Therefore, in the electric wire copper recovery apparatus described in Patent Literature 1, in a downstream-side end portion of a separation bed 2, a receiving tank 26 which is recessed under the separation bed 2 is provided, a discharge opening which discharges the floating substance in the upper layer of the receiving tank 26 is provided in a front wall of the receiving tank 26, a second separation bed 27 which vibrates together with the above-described separation bed 2 is provided in such a manner as to be aslant along the above-described separation bed 2, crushed materials which accumulate at the bottom of the above-described receiving tank 26 are supplied to a bed surface of the second separation bed 27 through a communication passage 28, and water is allowed to flow onto the bed surface of the second separation bed 27 by use of a shower device 29, whereby the floating substance is further separated and miscut materials are recovered.

### Citation List

### Patent Literature

Patent Literature 1: Japanese Patent Laid-Open No. 2007-136427

### Summary of Invention

### Technical Problem

However, in the configuration described in Patent Literature 1 above, it is impossible to recover miscut materials with good efficiency although the separation rate of resin scrap increases. For this reason, a problem with the configuration described in Patent Literature 1 is that it is impossible to increase the recovery rate of copper materials.

Therefore, the present invention was made to solve such problems and the object of the invention is to provide an electric wire scrap high-grade recovery apparatus with improved recovery rates of copper materials and the like by causing miscut materials contained in crushed materials to be capable of being separated and recovered with good efficiency. Solution to Problem

In order to achieve the above-described object, the present invention provides an electric wire scrap high-grade recovery apparatus according to claim 1.

That is, in the present invention, because the specific gravity of the miscut materials contained in the crushed materials is intermediate between the specific gravity of the copper materials and the like contained in the crushed materials and the specific gravity of the resin scrap contained in the crushed materials, when a weir which holds back part of the water flowing on the separation bed is provided across the width of the separation bed, the miscut materials gather in a region in the vicinity of an upper end of the pool of water which is formed by the weir. Paying attention to this phenomenon, in a region where the miscut materials on the separation bed gather, there is provided a partition plate which forms a miscut material passage whose one end is open in the vicinity of an upper end of a pool of water formed by the weir and in which water is not allowed to flow, and it is ensured that the miscut materials are separated and recovered by using this miscut material recovery passage.

In this connection, although the above-described partition plate may be formed on one side on the above-described separation bed, in view of efficiency it is preferred that the above-described partition plate be formed on both sides on the above-described separation bed.

In addition, the above-described partition plate can be configured in such a manner that an end portion thereof is bent toward the side of a widthwise middle portion of the separation bed. Because in this configuration the water level increases in the bent portion of the above-described partition plate, it becomes possible to guide the miscut material into the miscut material recovery passage with good efficiency.

Furthermore, because water does not flow in the miscut material recovery passage, the miscut material which has been guided into the miscut material recovery passage moves on the miscut material recovery passage upward due to the vibrations transmitted in an upward aslant direction of the separation bed. Because moisture is removed from the miscut material as a result of this movement, it is preferred that the recovery opening of the miscut material be provided in an upper portion of the miscut material recovery passage.

However, in the case where it is unnecessary to remove moisture from the miscut material, the recovery opening of the miscut material may be provided in the vicinity of a lower portion of the miscut material recovery passage.

And it is possible to configure the above-described weir in such a manner as to be provided in a plurality of rows at prescribed intervals across the width of the separation bed. In this configuration, the miscut material which has not been recovered can be recovered by being caused to settle out between a weir and a weir.

The above-described shower device can be configured in such a manner as to be provided with a receiving box into which the water which is recovered with the miscut material and is filtered with a filter is poured and whose one side is formed low, and in such a manner that a plurality of partitions which are formed low at one side of the receiving box and are provided at prescribed intervals, with the result that the water which overflows from the above-described receiving box is allowed to flow onto the above-described separation bed from between the above-described partitions.

In this configuration, even when resin scrap mixes into the water which has been poured into the receiving box, the resin scrap floats on the water and hence the inconvenience that it is impossible to obtain a uniform water flow due to the clogging of the shower device does not occur.

In the case where the copper materials and the like which are recovered by being moved upward on the separation bed contain cylindrical small copper pieces obtained by cutting copper wires and small brass pieces obtained by cutting connector parts, there may be further provided a brass removal screening device into which copper materials and the like recovered by being moved upward on the above-described separation bed are charged and from which the above-described small copper pieces are taken out by separating the above-described small brass pieces. The electric wire scrap high-grade recovery apparatus may be configured in such a manner as to selectively remove small brass pieces by means of the brass removal screening device by using a shape difference between the above-described small copper pieces and the above-described small brass pieces.

In this case, the above-described brass removal screening device can be configured in such a manner as to be provided with a mesh plate formed from a punching metal arranged horizontally and vibration additional means which gives vibrations transmitted in an upward slant direction to the mesh plate.

### Advantageous Effects of Invention

According to the present invention, paying attention to the phenomenon of the miscut materials contained in crushed materials gathering in a region in the vicinity of an upper end of the pool of water which is formed by the weir, there is provided on the separation bed a partition plate which forms a miscut material passage whose one end is open in the above-described region, where the above-described miscut materials gather, and through which water is not allowed to flow, and it is ensured that the miscut materials are separated and recovered by using this miscut material recovery passage. Therefore, it is possible to separate and recover the miscut materials with good efficiency, which enables the recovery rate of copper materials and the like to be substantially improved.

### Brief Description of Drawings

[Figure 1] Figure 1 is a schematic side view showing Embodiment 1 of an electric wire scrap high-grade recovery apparatus of the present invention.
[Figure 2] Figure 2 is a top view of the electric wire scrap high-grade recovery apparatus of Embodiment 1 shown in Figure 1.
[Figure 3] Figure 3 is a diagram to explain the water circulating treatment in the electric wire scrap high-grade recovery apparatus of Embodiment 1 shown in Figure 1.
[Figure 4] Figure 4 is a diagram to explain an example of a shower device used in the electric wire scrap high-grade recovery apparatus of Embodiment 1 shown in Figure 1.
[Figure 5] Figure 5 is a top view showing Embodiment 2 of an electric wire scrap high-grade recovery apparatus of the present invention.
[Figures 6(A) and 6(B)] Figures 6(A) and 6(B) are diagrams showing a brass removal screening device used in Embodiment 3 of an electric wire scrap high-grade recovery apparatus of the present invention.

### Description of Embodiments

Embodiments for carrying out the present invention will be described below with reference to the drawings attached to the application.

### Embodiment 1

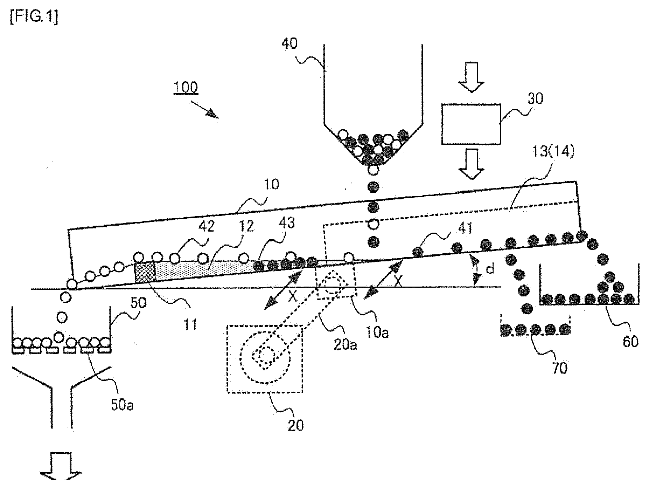

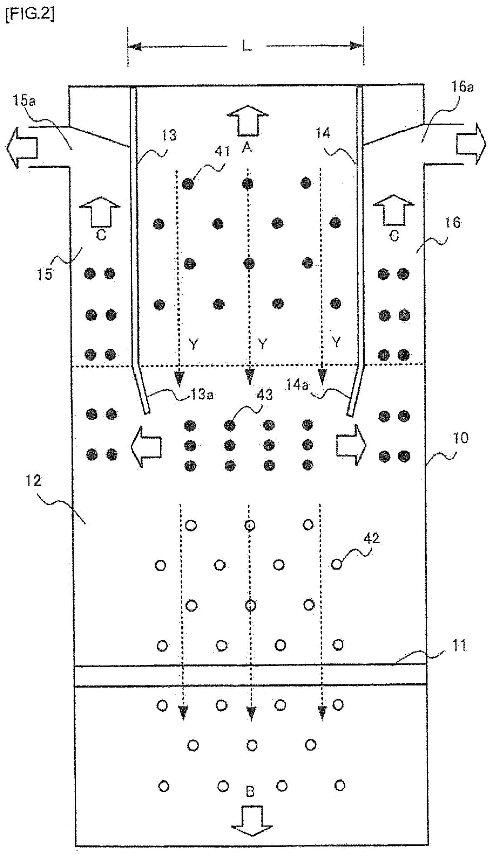

Figure 1 shows a schematic side view showing Embodiment 1 of an electric wire scrap high-grade recovery apparatus of the present invention, and Figure 2 shows a top view of the electric wire scrap high-grade recovery apparatus of Embodiment 1 shown in Figure 1.

Although copper materials and the like, which are the objects of recovery of the electric wire scrap high-grade recovery apparatus of the present invention, include various kinds of metals contained in wire scrap, such as copper, aluminum, and gold, in the embodiments described below, a description will be given of the case where the object of recovery of the electric wire scrap high-grade recovery apparatus of the present invention is copper.

In Figures 1 and 2, the electric wire scrap high-grade recovery apparatus 100 is provided with a separation bed 10 which is disposed in an inclined condition at an angle d, a vibration generator 20 which gives vibrations transmitted in an upward aslant X-direction to the separation bed 10, a shower device 30 which causes water to flow onto the separation bed 10, a crushed material charging device 40 which charges crushed materials obtained by crushing electric wire scrap using a crusher, which is not shown, onto the separation bed 10, a resin scrap recovery box 50 which recovers the resin scrap contained in the crushed materials from a lower end of the separation bed 10, a copper material recovery box 60 which recovers the copper materials 41 contained in the crushed materials from an upper end of the separation bed 10, and a miscut material recovery box 70 which recovers miscut materials 43 separated via miscut material recovery passages 15, 16 formed by partition plates 13, 14 provided on the separation bed 10.

In a lower portion of the separation bed 10, a weir 11 which holds back part of the water flowing on the separation bed is provided across the width of the separation bed, and a pool 12 of water is formed by the weir 11 in part of the lower portion on the separation bed 10.

The vibration generator 20, which is composed of, for example, an eccentric motor, is connected to a link attaching portion 10a provided on a bottom surface of the separation bed 10 via an X-direction link 20a and gives vibrations in an X-direction to the separation bed 10.

A filter 50a is provided on a lower surface of the resin scrap recovery box 50, and is configured to circulate and reuse the water recovered from the lower surface of the resin scrap recovery box 50.

Incidentally, although in Embodiment 1 the angle d of the separation bed 10 is set at 5 degrees, it is possible to set the angle d in the range of 3 degrees to 10 degrees.

In Embodiment 1 the vibration direction X given by the vibration generator 20 to the separation bed 10 is set at 45 degrees and the amplitude width is set at 2 to 3 millimeters. Furthermore, in Embodiment 1 the height of the weir 11 is set at 10 to 15 millimeters.

Copper materials 41, resin scrap 42, and miscut materials 43 are contained in the crushed materials charged from the crushed material charging device 40 onto the separation bed 10. The specific gravity of the copper materials 41 is 7.9, the specific gravity of the resin scrap 42 is in the range of 0.9 to 1.9, and the specific gravity of the miscut materials 43 is between the specific gravities of the copper materials 41 and the resin scrap 42.

In the electric wire scrap high-grade recovery apparatus 100 of the above configuration, when the crushed materials are charged from the crushed material charging device 40 onto the separation bed 10, with the water not allowed to flow from the shower device 30 onto the separation bed 10, the copper materials 41, resin scrap 42, and miscut materials 43 contained in the crushed materials move on the separation bed 10 while repeating small jumps due to the vibrations given by the vibration generator 20 to the separation bed 10.

Incidentally, in the electric wire scrap high-grade recovery apparatus 100, a uniform water flow (indicated by the arrows Y in Figure 2) is caused by the shower device 30 to occur on the upper surface of the separation bed 10. The crushed materials containing the copper materials 41, resin scrap 42, and miscut materials 43, which have been charged by this water flow from the crushed material charging device 40 onto the separation bed 10, are caused to flow downward from the separation bed 10 and reach the pool 12 formed by the weir 11, where the crushed materials are washed.

The copper materials 41 settle out onto the bottom surface of the pool 12 because of their larger specific gravity than water, come into contact with the upper surface of the separation bed 10, and move upward on the separation bed 10 while repeating small jumps due to the vibrations given by the vibration generator 20 to the separation bed 10. The arrow A of Figure 2 indicates the moving direction of the copper materials 41.

The copper materials 41 which have moved upward on the separation bed 10, fall downward at the upper end of the separation bed 10, and are recovered in the copper material recovery box 60.

In contrast, in the pool 12 the resin scrap 42 floats on the upper surface of the pool because of its smaller specific gravity than water, is caused to flow by a water flow, moves downward on the separation bed 10, overflows the weir 11, and reaches the lower end of the separation bed 10. The arrow B of Figure 2 indicates the moving direction of the resin scrap 42.

The resin scrap 42 which has moved downward on the separation bed 10, falls downward with the water at the lower end of the separation bed 10, and is recovered in the resin scrap recovery box 50.

On the other hand, although the miscut materials 43 settle out in the pool 12, the specific gravity thereof is between the specific gravities of the copper materials 41 and of the resin scrap 42 and hence the force with which the miscut materials move upward on the separation bed 10 and the force of flowing the miscut materials downward by a water flow are almost equal, with the result that the miscut materials accumulate in the vicinity of the upper end of the pool 12 and continue increasing in number in the vicinity of the upper end of the pool 12.

If this condition is left as it is, the force with which the miscut materials 43 move upward on the separation bed 10 increases, and eventually the miscut materials 43 move upward. If the miscut materials 43 mix in the copper materials 41, then the grade of the recovered copper materials decreases. Therefore, it is necessary to remove the miscut materials 43.

Therefore, in Embodiment 1, on both sides on the separation bed 10, the partition plates 13, 14 which extend from the upper end of the separation bed 10 to the vicinity of the upper end of the pool 12 are provided, and a region having the length L between the partition plate 13 and the partition plate 14 is configured in such a manner that although water is allowed to flow from the shower device 30, water is not allowed to flow in the regions on both sides on the separation bed 10 partitioned by the partition plate 13 and the partition plate 14, and that the miscut material recovery passages 15, 16 are formed in the regions on both sides on the separation bed 10 partitioned by the partition plate 13 and the partition plate 14, whereby the miscut material 43 accumulating in the vicinity of the upper end of the pool 12 is recovered via the miscut material recovery passages 15, 16.

Further, in Embodiment 1, end portions 13a, 14a corresponding to the openings of the miscut material recovery passages 15,16 of the partition plate 13, 14 are configured in such a manner as to be bent toward the sides of a widthwise middle portion of the separation bed 10.

The reason for this is that by this measure, the miscut material 43 accumulating in the vicinity of the upper end of the pool 12 is guided with good efficiency into the miscut material recovery passages 15, 16 formed in the regions on both sides of the separation bed 10.

That is, when the end portions 13a, 14a of the partition plates 13, 14 are configured in such a manner as to be bent toward the sides of a widthwise middle portion of the separation bed 10, the water passage of the water allowed to flow from the shower device 30 is made narrow in these portions and hence the water level increases, with the result that it is possible to efficiently guide the miscut material 43 accumulating in the vicinity of the upper end of the pool 12 into the miscut material recovery passages 15, 16 formed in the regions on both sides of the separation bed 10.

Because the water is not allowed to flow in the miscut material recovery passages 15, 16, the miscut materials 43 guided into the miscut material recovery passages 15, 16 move in the miscut material recovery passages 15, 16 while repeating small jumps due to the vibrations given by the vibration generator 20 to the separation bed 10 in the direction indicated by the arrows C.

While the miscut materials 43 are moving upward in the miscut material recovery passages 15, 16, moisture is removed from the miscut materials 43. The miscut materials 43 pass through recovery openings 15a, 16a above the miscut material recovery passages 15, 16 and are recovered in the miscut material recovery box 70.

Further, although small amounts of copper materials 41 and resin scrap 42 are contained in the miscut materials 43 recovered in the miscut material recovery box 70, the miscut materials 43 recovered in the miscut material recovery box 70 are crushed again by a grinding machine, which is not shown, and are recharged from the crushed material charging device 40 onto the separation bed 10, whereby it is possible to recover copper materials again.

According to Embodiment 1 also the copper materials contained in the miscut materials 43 can be recovered with good efficiency in this manner and hence the recovery rate of copper materials from electric wire scrap can be further improved.

Further, in Embodiment 1 the configuration is such that the partition plates 13, 14 are provided on both sides on the separation bed 10 and the miscut material recovery passages 15, 16 are formed in the regions on both sides on the separation bed 10, whereby miscut materials 43 are recovered via the miscut material recovery passages 15, 16. However, the configuration may be such that a partition plate is provided only on one side on the separation bed 10, whereby a miscut material recovery passage is formed in the region on one side on the separation bed 10 and the miscut materials 43 are recovered via this miscut material recovery passage.

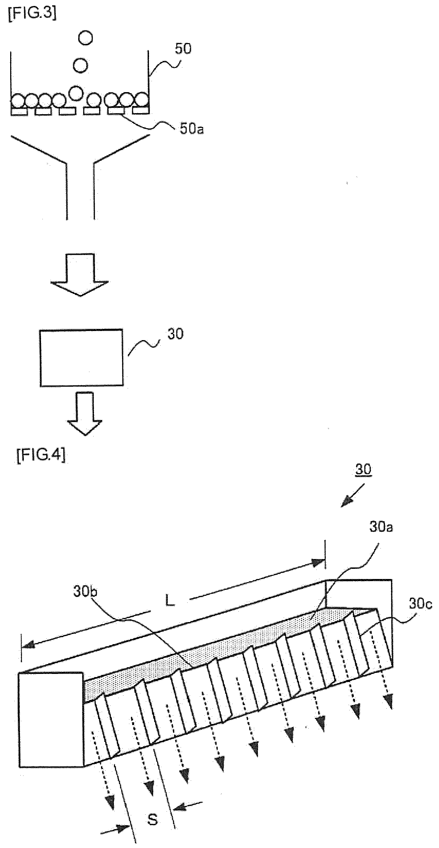

In the electric wire scrap high-grade recovery apparatus 100 of Embodiment 1, as shown in Figure 3, a circulating system is adopted which involves providing a filter 50a on a lower surface of the resin scrap recovery box 50 and returning the water recovered from the lower surface of the resin scrap recovery box 50 to the shower device 30 via the filter 50a, thereby reusing the water allowed to flow on the separation bed 10.

In the case where this circulating system is adopted, part of the resin scrap not removed by the filter 50a and of the scattered resin scrap may sometimes mix in the water, causing the clogging of the shower device 30, with the result that it is impossible to obtain a uniform water flow. If a uniform water flow cannot be obtained in the shower device 30, gaps of water flow are formed in these portions on the separation bed 10 and the resin scrap 42 moves upward on the separation bed 10. If the resin scrap mixes in the copper materials 41, the grade of recovered copper materials decreases.

Therefore, in Embodiment 1, an overflow system as shown in Figure 4 is adopted as the shower device 30.

In the shower device 30 shown in Figure 4, the water recovered from the lower surface of the resin scrap recovery box 50 is poured into a rectangular receiving box 30a of length L, one side 30b of the receiving box 30a is made low, and the water is caused to overflow from here and is allowed to flow onto the separation bed 10. In this connection, a plurality of partitions 30c are provided in this overflow area at prescribed intervals S, for example, at 2-cm intervals.

According to such a configuration as described above, thanks to the action of the partition 30c, it is possible to supply shower-like uniform water onto the separation bed 10. Even when at this time, resin scrap mixes in the water poured into the receiving box 30a, this resin scrap floats on the water and hence the inconvenience that it is impossible to obtain a uniform water flow because of the clogging in the shower device 30 does not occur.

### Embodiment 2

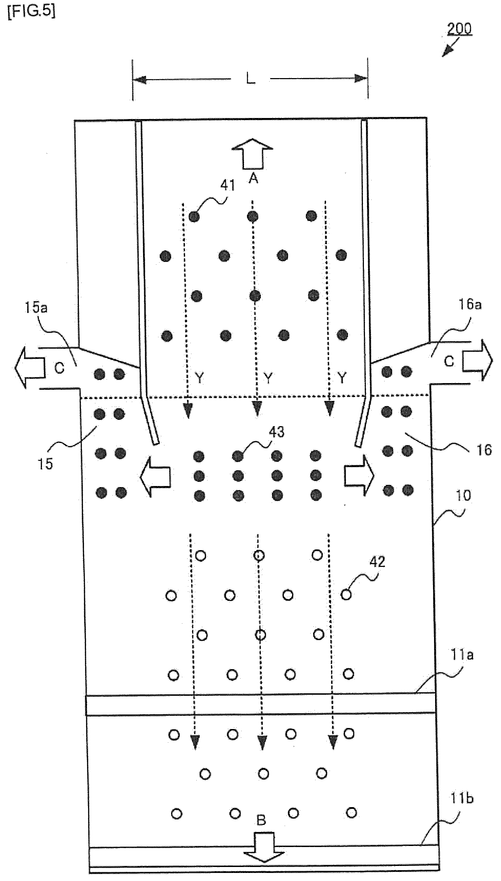

Figure 5 shows Embodiment 2 of an electric wire scrap high-grade recovery apparatus of the present invention. Figure 5 shows a top view of Embodiment 2 of the electric wire scrap high-grade recovery apparatus of the present invention.

The electric wire scrap high-grade recovery apparatus 200 of Embodiment 2 of the present invention shown in Figure 5 differs from Embodiment 1 described with the aid of Figures 1 to 4 in that the recovery openings 15a, 16a of the miscut material recovery passages 15, 16 are provided in the vicinity of the lower portions of the miscut material recovery passages 15, 16 and that dual weirs 11a, 11b are provided in place of the weir 11 provided in the lower portion of the separation bed 10. Other components are the same as in Embodiment 1 described with the aid of Figures 1 to 4. Incidentally, in Figure 5, for the convenience of explanation, the same symbols as used in Embodiment 1 refer to places which perform the same functions as in Embodiment 1.

As in Embodiment 1 described with the aid of Figures 1 to 4, in the electric wire scrap high-grade recovery apparatus 200 of Embodiment 2, the separation bed 10 is disposed in an inclined condition at an angle d, for example, at 5 degrees, and vibrations of the amplitude width at 2 to 3 millimeters are given to the separation bed 10 at an angle of upward aslant 45 degrees by use of the vibration generator 20 shown in Figure 1. And a uniform water flow (indicated by the arrows Y in Figure 5) is generated on the upper surface of the separation bed 10 by use of the shower device 30 shown in Figure 1.

Further, in the lower portions of the separation bed 10 the duplex weirs 11a, 11b are provided with a prescribed spacing therebetween. A pool 12 of water is formed by the weir 11a in part of the lower portion on the separation bed 10, and a further pool of water is formed by the weir 11b below the pool 12.

Further, on both sides on the separation bed 10, the partition plates 13, 14 which extend from the upper end of the separation bed 10 to the vicinity of the upper end of the pool 12 are provided, and a region having the length L between the partition plate 13 and the partition plate 14 is configured in such a manner that although water is allowed to flow from the shower device 30, water is not allowed to flow in the regions on both sides on the separation bed 10 partitioned by the partition plate 13 and the partition plate 14, whereby the miscut material recovery passages 15, 16 are formed in the regions on both sides on the separation bed 10 partitioned by the partition plate 13 and the partition plate 14.

In the electric wire scrap high-grade recovery apparatus 200 of such a configuration, when crushed materials containing copper materials 41, resin scrap 42, and miscut materials 43 are charged from the crushed material charging device 40 shown in Figure 1 onto the separation bed 10, the crushed materials are caused to flow by the water flow from the shower device 30 flow downward on the separation bed 10, and reach the pool 12 formed by the weir 11a, where the crushed materials are washed.

In this connection, the copper materials 41 settle out in the pool 12 because of their larger specific gravity than water, come into contact with the upper surface of the separation bed 10, and move upward on the separation bed 10 while repeating small jumps due to the vibrations given by the vibration generator 20 to the separation bed 10. The arrow A of Figure 5 indicates the moving direction of the copper materials 41. The copper materials 41 which have moved upward on the separation bed 10, fall downward at the upper end of the separation bed 10 and are recovered in the copper material recovery box 60.

In contrast, in the pool 12 the resin scrap 42 floats on the upper surface of the pool because of its smaller specific gravity than water, is allowed to flow by a water flow, moves downward on the separation bed 10, overflows the weirs 11a, 11b, and reaches the lower end of the separation bed 10. The arrow B of Figure 5 indicates the moving direction of the resin scrap 42. The resin scrap 42 which has moved downward on the separation bed 10, falls downward with the water at the lower end of the separation bed 10, and is recovered in the resin scrap recovery box 50.

On the other hand, the miscut materials 43 accumulate in the vicinity of the upper end of the pool 12. The miscut materials 43 are guided into the miscut material recovery passages 15, 16, move upward on the miscut material recovery passages 15, 16 while repeating small jumps due to the vibrations given by the vibration generator 20 to the separation bed 10, and are recovered from the recovery openings 15a, 16a in the direction of the arrows C.

Because in this embodiment the length of the miscut material recovery passages 15, 16 is small, moisture is not sufficiently removed from the miscut materials 43.

Incidentally, small amounts of copper materials 41 and resin scrap 42 are contained in the miscut materials 43 recovered in the miscut material recovery box 70, and small amounts of miscut materials 43 settle out the upstream side of the weir 11a and between the weir 11a and the weir 11b**.** The miscut materials 43 caused to settle out the upstream side of the weir 11a and between the weir 11a and the weir 11b, along with the miscut materials 43 recovered from the recovery openings 15a, 16a, are crushed again by a grinding machine, which is not shown, and are recharged from the crushed material charging device 40 onto the separation bed 10.

As described above, according to Embodiment 2, it is possible to recover the copper materials included in the miscut materials 43, including the miscut materials 43 caused to settle out on the upstream side of the weir 11a and between the weir 11a and the weir 11b, and hence it is possible to further improve the recovery rate of copper materials from electric wire scrap.

Also in Embodiment 2 above, the configuration may be such that a partition plate is provided only on one side on the separation bed 10 and a miscut material recovery passage is formed in the region on one side on the separation bed 10, whereby the miscut materials 43 are recovered via this miscut material recovery passage.

Furthermore, although the recovery openings 15a, 16a of the miscut material recovery passages 15, 16 are provided in the vicinity of the lower portions of the miscut material recovery passages 15, 16, in the same manner as in Embodiment 1 the recovery openings 15a, 16a may be provided above the miscut material recovery passages 15, 16.

Incidentally, in the case where wire harnesses used in vehicles and the like are treated using the electric wire scrap high-grade recovery apparatus of the above configuration, certain amounts of plate-like small brass pieces are included in the copper materials and the like which fall downward from the upper end of the separation bed 10 by being moved upward on the separation bed 10 because the connectors of wire harnesses are made of brass. The presence of small brass pieces lowers the grade of the recovered copper.

Therefore, for the case where the object to be treated using an electric wire scrap high-grade recovery apparatus of the above configuration is wire harnesses used in vehicles and the like and the copper materials and the like recovered by being moved upward on the separation bed 10 shown in Figure 1 or Figure 5 contain cylindrical small copper pieces obtained by cutting copper wires and plate-like small brass pieces obtained by cutting connector portions, a description will be given of Embodiment 3 of an electric wire scrap high-grade recovery apparatus of the present invention in which a brass removal screening device which separates small brass pieces from the copper materials and the like is further provided.

### Embodiment 3

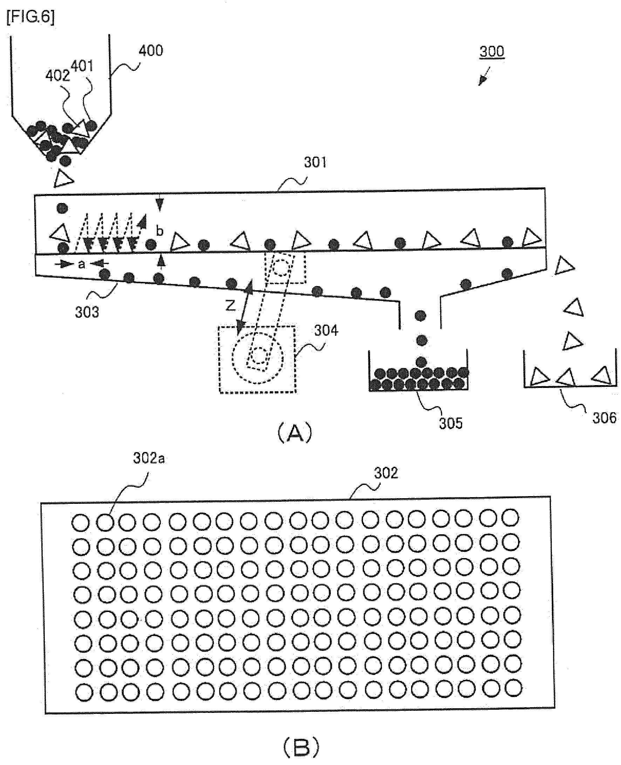

Figures 6(A) and 6(B) show a brass removal screening device used in Embodiment 3 of an electric wire scrap high-grade recovery apparatus of the present invention.

A brass removal screening device 300 shown in Figure 6(A) is provided with a screening part 301, a copper material recovery passage 303 provided below the screening part 301, and a vibration applicator 304 which gives vibrations to the screening part 301.

A hopper 400 is provided at the left end of the brass removal screening device 300, and copper materials and the like which are the objects of brass removal, containing cylindrical small copper pieces 401 obtained by cutting copper wires and plate-like small brass pieces 402 obtained by cutting connector portions, are charged from the hopper 400 into the brass removal screening device. Incidentally, copper materials and the like recovered after upward movement on the separation bed 10 of Figure 1 or Figure 5 are received in the hopper 400 after being dried by a drying device, which is not shown.

As shown in Figure 6(B), the screening part 301 is provided, on the lower surface thereof, with a screen mesh plate 302 formed from a punching metal in which a large number of holes 302a of 1 Φ, for example, and Z-direction vibrations are given by the vibration applicator 304 to the screen mesh plate 302.

In this connection, in this embodiment the direction Z in which vibrations are given by the vibration applicator 304 is set in such a manner as to provide an inclination of approximately 7 degrees with respect to the vertical direction so that the jumping height b of the jumping trajectory of the small copper pieces 401 and small brass pieces 402 indicated by broken lines in Figure 6(A) becomes three times the travel distance a.

In this configuration, the cylindrical small copper pieces 401 and plate-like small brass pieces 402 which have fallen from the hopper 400 onto the screen mesh plate 302 of the brass removal screening device 300 move slowly in the direction of the arrow D while jumping as indicated by the broken lines in Figure 6(A).

And during this movement, the cylindrical small copper pieces 401 fall from the holes 302a of the punching metal of the screen mesh plate 302 onto the copper material recovery passage 303 below, pass through the copper material recovery passage 303, and are recovered in the copper recovery box 305.

Because the small brass pieces 402 have a plate-like shape, the small brass pieces do not fall downward through the holes 302a of the punching metal of the screen mesh plate 302, and move on the screen mesh plate 302 in the direction of the arrow D. And the small brass pieces 402 fall downward at the end portion of the screen mesh plate 302 and are recovered in the brass recovery box 306.

Incidentally, because vibrations are given by the vibration applicator 304 to the screen mesh plate 302, in this treatment clogging does not occur in the screen mesh plate 302.

By adopting the brass removal screening device 300 of the above configuration, even in the case where the object of treatment is wire harnesses used in vehicles and the like, it becomes possible to remove almost all small brass pieces, and this enables higher-quality copper materials to be recovered.

Incidentally, in the above-described embodiments, the description was given of the case where the object of recovery of the electric wire scrap high-grade recovery apparatus is copper materials. However, the same configuration can be adopted also in the case where the object of recovery is other metals contained in wiring scrap, such as aluminum and gold.

### Reference Signs List

- 10: Separation bed
- 10a: Link attaching portion
- 11: Weir
- 11a: Weir
- 11b: Weir
- 12: Pool
- 13: Partition plate
- 14: Partition plate
- 15: Miscut material recovery passage
- 15a: Recovery opening
- 16: Miscut material recovery passage
- 16a: Recovery opening
- 20: Vibration generator
- 20a: Link
- 30: Shower device
- 30a: Receiving box
- 40: Crushed material charging device
- 41: Copper materials
- 42: Resin scrap
- 43: Miscut materials
- 50: Resin scrap recovery box
- 50a: Filter
- 60: Copper material recovery box
- 70: Miscut material recovery box
- 100: Electric wire scrap high-grade recovery apparatus
- 200: Electric wire scrap high-grade recovery apparatus
- 300: Brass removal screening device
- 301: Screening part
- 302: Screen mesh plate
- 303: Copper material recovery passage
- 304: Vibration applicator
- 305: Copper recovery box
- 306: Brass recovery box
- 400: Hopper
- 401: Small copper piece
- 401: Small brass piece

## Claims

1. An electric wire scrap high-grade recovery apparatus (100, 200) comprising:
an inclined separation bed (10),
a shower device (30) configured to allow water to flow onto the inclined separation bed (10),
a vibration generator (20) configured to simultaneously transmit vibrations in an upward aslant direction to the separation bed (10),
a charging means (40) for charging crushed electric wire scrap onto the separation bed (10) such that copper materials (41) contained in crushed materials are recovered by being moved upward on the separation bed (10) through the vibrations given by the vibration generator (20) and resin scrap (42) contained in the crushed materials are separated by being moved downward on the separation bed (10) through the water flown from the shower device (30),
a weir (11) provided in a lower portion on the separation bed (10) adapted to hold back part of the water flowing on the separation bed (10) and extending across the width of the separation bed (10),
**characterized in that**
a partition plate (13, 14) is provided on at least one side on the separation bed (10) which forms a miscut material recovery passage (15, 16) whose one end is open in the vicinity of an upper end of a pool of water (12) formed by the weir (11) and through which the water from the shower device (30) is not allowed to flow such that miscut materials comprising resin scrap (42) partially adhered to copper materials (41) contained in the crushed materials are separated and recovered via the miscut material recovery passage (15, 16).

2. The electric wire scrap high-grade recovery apparatus (100, 200) according to claim 1, wherein the partition plate (13, 14) is provided on both sides on the separation bed (10), and wherein the miscut material recovery passage (15, 16) is provided on both sides on the separation bed (10).

3. The electric wire scrap high-grade recovery apparatus (100, 200) according to claim 1 or 2, wherein in the partition plate (13, 14), an end portion corresponding to an opening of the miscut material recovery passage (15, 16) is bent toward the side of a widthwise middle portion of the separation bed (10).

4. The electric wire scrap high-grade recovery apparatus (100, 200) according to any one of claims 1 to 3, further comprising a recovery opening (15a, 16a) provided in an upper portion of the miscut material recovery passage (15, 16) for recovering miscut material moving upward on the miscut material recovery passage (15, 16).

5. The electric wire scrap high-grade recovery apparatus (100, 200) according to any one of claims 1 to 3, further comprising a recovery opening (15a, 16a) provided in the vicinity of a lower portion of the miscut material recovery passage (15, 16) for recovering miscut material separated via the miscut material recovery passage (15, 16).

6. The electric wire scrap high-grade recovery apparatus (100, 200) according to any one of claims 1 to 5, wherein the weir (11) is provided in a plurality of rows at prescribed intervals across the width of the separation bed (10).

7. The electric wire scrap high-grade recovery apparatus (100, 200) according to any one of claims 1 to 6, wherein the shower device (30) is provided with a receiving box (30a) into which the water which is recovered with the miscut material and is filtered with a filter is poured and whose one side is formed low, and a plurality of partitions (30c) which are formed low at one side of the receiving box (30a) and are provided at prescribed intervals, and the water which overflows from the receiving box (30a) is allowed to flow onto the separation bed (10) from between the partitions (30c).

8. The electric wire scrap high-grade recovery apparatus (100, 200) according to any one of claims 1 to 7, wherein the copper materials to be recovered by being moved upward on the separation bed comprise cylindrical small copper pieces obtained by cutting copper wires and small brass pieces obtained by cutting connector parts, and wherein there is further provided a brass removal screening device (300) configured to being charged with copper materials recovered by being moved upward on the separation bed (10) for taking out the small copper pieces by separating the small brass pieces.

9. The electric wire scrap high-grade recovery apparatus (100, 200) according to claim 8, wherein the brass removal screening device (300) is provided with a mesh plate (302) formed from a punching metal arranged horizontally and vibration application means (304) which gives vibrations transmitted in an upward slant direction to the mesh plate.

## Patentansprüche

1. Hochgradige Rückgewinnungsvorrichtung für elektrische Drahtabfälle (100, 200), umfassend:
ein geneigtes Trennbett (10),
eine Brausevorrichtung (30), die so ausgestaltet ist, dass sie Wasser auf das geneigte Trennbett (10) fließen lässt,
ein Vibrationsgenerator (20), der so ausgestaltet ist, dass er gleichzeitig Vibrationen schräg nach oben auf das Trennbett (10) überträgt,
ein Belademittel (40) zum Beladen des Trennbetts (10) mit zerkleinerten elektrischen Drahtabfällen derart, dass Kupfermaterial (41), das in zerkleinertem Material enthalten ist, rückgewonnen wird, indem es durch die von dem Vibrationsgenerator (20) abgegebenen Vibrationen auf dem Trennbett (10) nach oben bewegt wird, und
Harzabfälle (42), die in dem zerkleinerten Material enthalten sind, abgesondert werden, indem sie durch das aus der Brausevorrichtung (30) geflossene Wasser auf dem Trennbett (10) nach unten bewegt werden,
ein in einem unteren Abschnitt auf dem Trennbett (10) vorgesehenes Wehr (11), das so angepasst ist, dass es einen Teil des auf dem Trennbett (10) fließenden Wassers zurückhält, und sich über die Breite des Trennbetts (10) erstreckt,
**dadurch gekennzeichnet, dass**
eine Abteilplatte (13, 14) auf mindestens einer Seite auf dem Trennbett (10) vorgesehen ist, die einen Fehlschnittmaterial-Rückgewinnungsdurchlass (15, 16) bildet, wovon ein Ende in der Nähe eines oberen Endes eines durch das Wehr (11) gebildeten Wasserbeckens (12) offen ist und durch welchen das Wasser aus der Brausevorrichtung (30) nicht fließen darf, wodurch Fehlschnittmaterial, das Harzabfälle (42) umfasst, die teilweise an in dem zerkleinerten Material enthaltenem Kupfermaterial (41) haften, über den Fehlschnittmaterial-Rückgewinnungsdurchlass (15, 16) abgesondert und rückgewonnen wird.

2. Hochgradige Rückgewinnungsvorrichtung für elektrische Drahtabfälle (100, 200) nach Anspruch 1, wobei die Abteilplatte (13, 14) auf beiden Seiten auf dem Trennbett (10) vorgesehen ist und
wobei der Fehlschnittmaterial-Rückgewinnungsdurchlass (15, 16) auf beiden Seiten auf dem Trennbett (10) vorgesehen ist.

3. Hochgradige Rückgewinnungsvorrichtung für elektrische Drahtabfälle (100, 200) nach Anspruch 1 oder 2, wobei in der Abteilplatte (13, 14) ein einer Öffnung des Fehlschnittmaterial-Rückgewinnungsdurchlasses (15, 16) entsprechender Endabschnitt zur Seite eines der Breite nach verlaufenden mittleren Abschnitts des Trennbetts (10) hin gebogen ist.

4. Hochgradige Rückgewinnungsvorrichtung für elektrische Drahtabfälle (100, 200) nach einem der Ansprüche 1 bis 3, ferner umfassend eine in einem oberen Abschnitt des Fehlschnittmaterial-Rückgewinnungsdurchlasses (15, 16) vorgesehene Rückgewinnungsöffnung (15a, 16a) zum Rückgewinnen von Fehlschnittmaterial, das sich auf dem Fehlschnittmaterial-Rückgewinnungsdurchlass (15, 16) nach oben bewegt.

5. Hochgradige Rückgewinnungsvorrichtung für elektrische Drahtabfälle (100, 200) nach einem der Ansprüche 1 bis 3, ferner umfassend eine in der Nähe eines unteren Abschnitts des Fehlschnittmaterial-Rückgewinnungsdurchlasses (15, 16) vorgesehene Rückgewinnungsöffnung (15a, 16a) zum Rückgewinnen von über den Fehlschnittmaterial-Rückgewinnungsdurchlass (15, 16) abgesondertem Fehlschnittmaterial.

6. Hochgradige Rückgewinnungsvorrichtung für elektrische Drahtabfälle (100, 200) nach einem der Ansprüche 1 bis 5, wobei das Wehr (11) in einer Mehrzahl von Reihen in vorgeschriebenen Abständen über die Breite des Trennbetts (10) vorgesehen ist.

7. Hochgradige Rückgewinnungsvorrichtung für elektrische Drahtabfälle (100, 200) nach einem der Ansprüche 1 bis 6, wobei die Brausevorrichtung (30) versehen ist mit einem Aufnahmekasten (30a), in den das mit dem Fehlschnittmaterial rückgewonnene und mit einem Filter gefilterte Wasser eingeleitet wird und dessen eine Seite niedrig ausgebildet ist, und einer Mehrzahl von Abteilern (30c), die auf einer Seite des Aufnahmekastens (30a) niedrig ausgebildet und in vorgeschriebenen Abständen vorgesehen sind, und zugelassen wird, dass das aus dem Aufnahmekasten (30a) überlaufende Wasser aus den Zwischenräumen zwischen den Abteilern (30c) auf das Trennbett (10) fließt.

8. Hochgradige Rückgewinnungsvorrichtung für elektrische Drahtabfälle (100, 200) nach einem der Ansprüche 1 bis 7, wobei das Kupfermaterial, das rückzugewinnen ist, indem es auf dem Trennbett nach oben bewegt wird, zylindrische kleine, durch Schneiden von Kupferdrähten erhaltene Kupferstücke und kleine, durch Schneiden von Anschlussarmaturteilen erhaltene Messingstücke umfasst, und
wobei ferner eine Messingbeseitigungs-Siebvorrichtung (300) vorgesehen ist, die so ausgestaltet ist, dass sie mit Kupfermaterial, das rückgewonnen wird, indem es auf dem Trennbett (10) nach oben bewegt wird, beladen wird, um die kleinen Kupferstücke durch Absondern der kleinen Messingstücke zu extrahieren.

9. Hochgradige Rückgewinnungsvorrichtung für elektrische Drahtabfälle (100, 200) nach Anspruch 8, wobei die Messingbeseitigungs-Siebvorrichtung (300) versehen ist mit einer aus einem horizontal angeordneten Stanzmetall gebildeten Siebplatte (302) und einem Vibrationsbeaufschlagungsmittel (304), das Vibrationen abgibt, die schräg nach oben auf die Siebplatte übertragen werden.

## Revendications

1. Dispositif de récupération de haut grade pour des rebuts de fil électrique (100, 200), comprenant :
un lit de séparation incliné (10),
un dispositif de douche (30) configuré pour permettre à de l'eau de s'écouler sur le lit de séparation incliné (10),
un générateur de vibrations (20) configuré pour simultanément transmettre des vibrations au lit de séparation (10), dans une direction oblique vers le haut,
un moyen de chargement (40) pour charger les rebuts de fils électriques écrasés sur le lit de séparation (10) de telle sorte que les matériaux de cuivre (41) contenus dans les matériaux écrasés sont récupérés en étant déplacés vers le haut sur le lit de séparation (10) par les vibrations imprimées par le générateur de vibrations (20) et des rebuts de résine (42) contenus dans les matériaux écrasés sont séparés en étant déplacés vers le bas sur le lit de séparation (10) par l'eau s'écoulant du dispositif de douche (30),
un barrage (11) fourni dans une portion basse sur le lit de séparation (10) adapté pour retenir une partie de l'eau s'écoulant sur le lit de séparation (10) et s'étendant en travers de la largeur du lit de séparation (10),
**caractérisé en ce que**
une plaque de partition (13, 14) est fournie sur au moins un côté du lit de séparation (10), laquelle forme un passage de récupération de matériaux mal coupés (15, 16) dont l'une extrémité est ouverte dans le voisinage d'une extrémité supérieure d'un bassin d'eau (12) formé par le barrage (11) et par laquelle l'eau du dispositif de douche (30) n'est pas autorisée à s'écouler, de telle sorte que les matériaux mal coupés comprenant des rebuts de résine (42) adhérant partiellement aux matériaux de cuivre (41) contenus dans les matériaux écrasés sont séparés et récupérés par le passage de récupération de matériaux mal coupés (15, 16).

2. Le dispositif de récupération de haut grade pour des rebuts de fil électrique (100, 200) selon la revendication 1, la plaque de partition (13, 14) étant fournie sur les deux côtés du lit de séparation (10), et
le passage de récupération de matériaux mal coupés (15, 16) étant fourni sur les deux côtés du lit de séparation (10).

3. Le dispositif de récupération de haut grade pour des rebuts de fil électrique (100, 200) selon la revendication 1 ou 2,
dans la plaque de partition (13, 14), une portion d'extrémité correspondant à une ouverture du passage de récupération de matériaux mal coupés (15, 16) étant courbée vers le côté d'une portion de milieu relativement à la largeur du lit de séparation (10).

4. Le dispositif de récupération de haut grade pour des rebuts de fil électrique (100, 200) selon l'une quelconque des revendications 1 à 3,
comprenant en outre une ouverture de récupération (15a, 16a) fournie dans une portion supérieure du passage de récupération de matériaux mal coupés (15, 16) pour récupérer des matériaux mal coupés se déplaçant vers le haut sur le passage de récupération de matériaux mal coupés (15, 16).

5. Le dispositif de récupération de haut grade pour des rebuts de fil électrique (100, 200) selon l'une quelconque des revendications 1 à 3,
comprenant en outre une ouverture de récupération (15a, 16a) fournie dans le voisinage d'une portion inférieure du passage de récupération de matériaux mal coupés (15, 16) pour récupérer des matériaux mal coupés séparés par le passage de récupération de matériaux mal coupés (15, 16).

6. Le dispositif de récupération de haut grade pour des rebuts de fil électrique (100, 200) selon l'une quelconque des revendications 1 à 5, le barrage (11) étant fourni dans une pluralité de rangées à des intervalles prescrits à travers la largeur du lit de séparation (10).

7. Le dispositif de récupération de haut grade pour des rebuts de fil électrique (100, 200) selon l'une quelconque des revendications 1 à 6, le dispositif de douche (30) étant fourni avec une boîte de réception (30a) dans laquelle l'eau qui est récupérée avec les matériaux mal coupés et qui est filtrée avec un filtre est versée et dont un côté est formé de façon basse, et une pluralité de partitions (30c) qui sont formées de façon basse sur un côté de la boîte de réception (30a) et sont fournies à des intervalles prescrits, et l'eau qui s'écoule de la boîte de réception (30a) pouvant s'écouler sur le lit de séparation (10) à partir de l'espace entre les partitions (30c).

8. Le dispositif de récupération de haut grade pour des rebuts de fil électrique (100, 200) selon l'une quelconque des revendications 1 à 7, les matériaux de cuivre devant être récupérés en étant déplacés vers le haut sur le lit de séparation comprenant des petites pièces de cuivre cylindriques obtenues en coupant les fils de cuivre et de petites pièces de laiton obtenues en coupant des parties de connecteurs, et
un dispositif de tamisage d'élimination de laiton (300) étant en outre fourni pour être chargé avec des matériaux de cuivre récupérés en étant déplacés vers le haut sur le lit de séparation (10) pour retirer les petites pièces de cuivre en séparant les petites pièces de laiton.

9. Le dispositif de récupération de haut grade pour des rebuts de fil électrique (100, 200) selon la revendication 8, le dispositif de tamisage d'élimination de laiton (300) étant fourni avec une plaque en mailles (302) formée dans un métal de perforation disposé horizontalement et par des moyens d'application de vibrations (304) imprimant à la plaque en mailles des vibrations transmises dans une direction oblique vers le haut.
